(19) Europäisches Patentamt
European Patent Office
Office européen des brevets

(11) **EP 4 043 213 A1**

(12) **EUROPEAN PATENT APPLICATION**
published in accordance with Art. 153(4) EPC

(43) Date of publication:
**17.08.2022 Bulletin 2022/33**

(21) Application number: **20873962.3**

(22) Date of filing: **29.09.2020**

(51) International Patent Classification (IPC):
**B32B 27/32** $^{(2006.01)}$ **C08J 5/18** $^{(2006.01)}$
**H01G 4/32** $^{(2006.01)}$

(52) Cooperative Patent Classification (CPC):
**B32B 27/32; C08J 5/18; H01G 4/32**

(86) International application number:
**PCT/JP2020/036849**

(87) International publication number:
**WO 2021/070671 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.10.2019 JP 2019186528**

(71) Applicant: **Toray Industries, Inc.
Tokyo, 103-8666 (JP)**

(72) Inventors:
• **OKADA, Kazuma
Otsu-shi, Shiga 520-8558 (JP)**
• **OHKURA, Masatoshi
Otsu-shi, Shiga 520-8558 (JP)**
• **NAKANISHI, Yuta
Otsu-shi, Shiga 520-8558 (JP)**

(74) Representative: **Hoefer & Partner Patentanwälte
mbB
Pilgersheimer Straße 20
81543 München (DE)**

(54) **POLYOLEFIN FILM**

(57) Aiming to provide a film that is in smoothness, high heat resistance, and quality, the invention relates to a polyolefin film having an asperity height SPk of 300 nm or less on at least one surface, having a heat shrinkage rate of 2% or less in the main orientation direction after heat treatment at 130°C for 15 minutes, and having the sum of the $\alpha(110)$ crystallite size in the main orientation direction and its orthogonal direction of 20 nm or less.

EP 4 043 213 A1

**Description**

TECHNICAL FIELD

The present invention relates to a polyolefin film that is high in smoothness, heat resistance, and slipperiness and can be suitably used as film material for industrial uses.

BACKGROUND ART

Having high transparency, good mechanical characteristics, and good electric characteristics, polyolefin films have been applied in various fields including packaging, release films, tape materials, and electric materials such as cable armor and capacitors. Having high surface releasability and good mechanical characteristics in particular, they are preferred as process films and release films for use in production of various members including plastic products, building materials, and optical members.

When used as a protective film or cover film, the film material is required to have smoothness in order to prevent the transfer of dents to the adherend surface. When used as a film member of a capacitor, furthermore, the film is also required to be smooth in order to ensure improved dielectric strength. In particular, it is known that the height of asperities has relation with this as an index that greatly affects dent transfer. When used as cover film for thermosetting resin members etc., furthermore, the material is exposed to high temperatures in some cases where the resin is heat-cured after the film is attached thereon. In addition, capacitor films are used in high temperature environments in devices. In some cases where they are used as industrial film material as described above, they require both high smoothness and high heat resistance, and in recent years, there is an increasing demand for such films.

To increase the smoothness of a polyolefin resin film, generally used methods include the technique of decreasing the crystallinity of the resin and the technique of increasing the stretching ratio to smooth the roughness of the film surface. However, a decrease in crystallinity or an increase in stretching ratio can lead to deterioration in heat resistance in some cases, making it difficult to simultaneously realize high smoothness and high heat resistance.

A polyolefin film with a smoothed surface, furthermore, will be low in slipperiness and can suffer deterioration in film planarity in some cases due to creasing during conveyance between steps in the film production process or during use at the user's site. Accordingly, it has also been difficult to simultaneously realize high smoothness and high slipperiness.

Thus, for a film for industrial application to meet required characteristics, it has to be simultaneously high in smoothness, heat resistance, and slipperiness.

As a method for producing a film that is smoothed by reducing the heights of asperities, Patent document 1 proposes the technique of melt-blending a propylene based polymer, a 4-methyl-1-pentene based resin, and a polybutene based resin to produce a film with a smooth surface. As an example of a film that is improved in heat resistance by decreasing the heat shrinkage rate, Patent document 2 proposes a polypropylene resin film having a decreased heat shrinkage rate that is realized by increasing the stereoregularity of the resin. In addition, Patent document 3 proposes the technique of hot-pressing a capacitor to increase its heat resistance.

PRIOR ART DOCUMENTS

PATENT DOCUMENTS

Patent document 1: Japanese Unexamined Patent Publication (Kokai) No. 2016-068387
Patent document 2: Japanese Unexamined Patent Publication (Kokai) No. 2015-120331
Patent document 3: Japanese Unexamined Patent Publication (Kokai) No. HEI 11-273990

SUMMARY OF INVENTION

PROBLEMS TO BE SOLVED BY THE INVENTION

However, the method described in Patent document 1 cited above has the disadvantage of insufficient heat resistance. In addition, the methods described in Patent documents 2 and 3 have the disadvantage of large surface roughness and insufficient smoothness. Thus, the present invention aims to solve the aforementioned problem. Specifically, its main object is to provide a polyolefin film that is high in smoothness, heat resistance, and slipperiness.

MEANS OF SOLVING THE PROBLEMS

To meet the object by solving the problem, the polyolefin film according to the present invention is characterized by having an asperity height SPk of 130 nm or less on at least one surface, having a heat shrinkage rate of 2% or less in the main orientation direction after heat treatment at 130°C for 15 minutes, and having the sum of the $\alpha(110)$ crystallite size in the main orientation direction and its orthogonal direction of 20 nm or less.

ADVANTAGEOUS EFFECTS OF THE INVENTION

Being high in smoothness, heat resistance, and slipperiness, the polyolefin film according to the present invention can be used widely and suitably as film for industrial applications, surface protective film, process film, release film, capacitor film, and the like.

BRIEF DESCRIPTION OF THE DRAWINGS

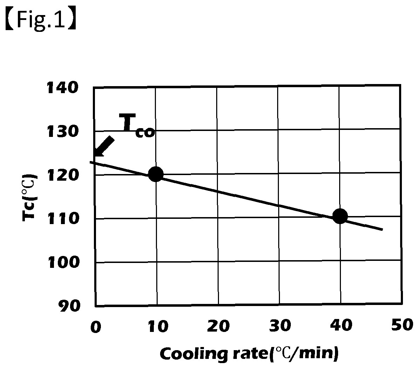

[Fig. 1] This gives a typical graph showing the crystallization temperature $T_{c0}$ of the polyolefin film.

DESCRIPTION OF PREFERRED EMBODIMENTS

The polyolefin film according to the present invention is characterized by having an asperity height SPk of 130 nm or less on at least one surface, having a heat shrinkage rate of 2% or less in the main orientation direction after heat treatment at 130°C for 15 minutes, and having the sum of the $\alpha(110)$ crystallite size in the main orientation direction and its orthogonal direction of 20 nm or less. A polyolefin film as referred herein is a film in which polyolefin resin accounts for more than 50 mass% and 100 mass% or less of the total mass, which accounts for 100 mass%, of all components of the film. Furthermore, polyolefin resin as referred herein is a resin in which olefin units account for more than 50 mol% and 100 mol% or less of the total quantity of all constituent units of the resin.

In the polyolefin film according to the present invention, the asperity height SPk is 130 nm or less, preferably 110 nm or less, more preferably 80 nm or less, still more preferably 50 nm or less, and particularly preferably 30 nm or less, on at least one surface. In the case where a polyolefin film having a SPk of more than 130 nm is used as release film on an optical member, the surface irregularities of the polyolefin film may be transferred to an optical member in some cases. In the case where the polyolefin film is used as capacitor film, furthermore, there may occur a large gap between the polyolefin film and the electrodes and accordingly electrons may be accelerated to cause a decrease in dielectric strength in some cases. Here, the SPk can be measured using a scanning white light interference microscope and an attached analysis system, and details of the measuring procedure will be described in section EXAMPLE.

To produce a polyolefin film with a SPk of 130 nm or less, component proportions in the range described later, for example, may be adopted and processed under film production conditions in the range described later. In particular, effective techniques include the use of materials with high crystallization temperatures so that small spherulites are formed in the casting step, the adoption of a low extrusion temperature and a low casting drum temperature so that strong cooling is realized in the casting step, and the implementation of preheating at a high temperature and stretching at a low temperature in the longitudinal/transverse stretching step to ensure uniform stretching. Though there are no particular limitations on the lower limit of the SPk, there is a substantial lower limit around 5 nm.

For the polyolefin film according to the present invention after heat treatment at 130°C for 15 minutes, the heat shrinkage rate in the main orientation direction is 2.0% or less, preferably 1.5% or less, more preferably 1.0% or less, still more preferably 0.5% or less, and particularly preferably 0.3 or less. In the case where a polyolefin film having a heat shrinkage rate of more than 2.0% in the main orientation direction after heat treatment at 130°C for 15 minutes is used as release film, it is likely to suffer deterioration in quality due to creasing that may occur as the film passes through high temperature steps after being combined with an adherend. In the case where the polyolefin film is used as capacitor film, furthermore, the film itself may undergo shrinkage due to the heat applied in the production process or during use and suffer inferior contact with the metalicon located at the end of the element to cause a decrease in dielectric strength, or the winding of the element may become tighter to cause capacity deterioration or short-circuit breakage in some cases.

To produce a polyolefin film having a heat shrinkage rate of 2.0% or less in the main orientation direction after heat treatment at 130°C for 15 minutes, a useful method is, for example, to use film component proportions in the range described later and process them under film production conditions in the range described later. It is particularly effective to adopt materials with a high stereoregularity and a low CXS to ensure a high crystallinity and perform heat treatment and relaxation after longitudinal and transverse stretching. There are no particular limitations on the lower limit of the heat shrinkage rate in the main orientation direction after heat treatment at 130°C for 15 minutes, but there is a substantial lower limit around -0.5%.

The heat shrinkage rate in the main orientation direction after heat treatment at 130°C for 15 minutes can be measured by the procedure described below. A polyolefin film specimen having a width of 10 mm and a length of 200 mm (measuring direction) with respect to the main orientation direction of the film is prepared, and gage marks are made at the positions 25 mm from both ends, followed by measuring the distance between the gage marks, which is referred to as the test length (10). In a no load state, it was heated for 15 minutes in an oven maintained at 130°C. It was then taken out and cooled at room temperature, followed by measuring the size (11) and calculating the heat shrinkage rate by the following equation.

$$\text{Heat shrinkage rate} = \{(l0-l1)/l0\} \times 100 \ (\%)$$

For the polyolefin film according to the present invention, the sum of the $\alpha(110)$ crystallite size in the main orientation direction and that in its orthogonal direction is 20 nm or less, preferably 18 nm or less, more preferably 17 nm or less, still more preferably 16 nm or less, and particularly preferably 15 nm or less. The $\alpha(110)$ crystallite size can be measured by the X-ray diffraction method and details of the measuring procedure will be described in section EXAMPLE. Here, to determine the main orientation direction adopted for the present invention, a direction of 0° is set arbitrarily in the film plane and Young's modulus is measured in 5° steps in the angle range of 0° to 175° from the direction of 0°. The direction in which the highest value was obtained is defined as the main orientation direction. For the present invention, furthermore, the direction parallel to the direction in which the polyolefin film is produced is referred to as the film production direction, the length direction or the MD direction whereas the film's in-plane direction orthogonal to the film production direction is referred as the width direction or the TD direction.

If the sum of the $\alpha(110)$ crystallite size in the main orientation direction and its orthogonal direction is more than 20 nm, there are large amorphous portions among crystal portions. In the case where the polyolefin film is used as release film, therefore, the productivity is likely to deteriorate due to a decrease in releasability from the adherend in the peeling step that is performed after the polyolefin film is combined with the adherend and passed through high temperature steps. In addition, if the polyolefin film is used as capacitor film, an increased leakage current is likely to occur in the amorphous portions. As a result, if a capacitor is produced therefrom, a large leakage current can occur therein, particularly in a high temperature environment, and a temperature rise can occur due to self-heating of the capacitor to cause capacity deterioration, short circuit breakage, voltage resistance deterioration, etc., possibly leading to a decrease in reliability.

To produce a polyolefin film with the sum of the $\alpha(110)$ crystallite size in the main orientation direction and its orthogonal direction of 20 nm or less, a good technique is, for example, to adopt component proportions in the range described later and process them under film production conditions in the range described later. In particular, effective techniques include the use of materials with high crystallization temperatures to decrease the size of spherulites to be formed in the casting step, the adoption of a low extrusion temperature and a low casting drum temperature so that strong cooling is achieved in the casting step, and the implementation of preheating at a high temperature and uniform, high-ratio stretching at a low temperature in the longitudinal/transverse stretching step. There are no particular limitations on the lower limit of the sum of the $\alpha(110)$ crystallite size in the main orientation direction and its orthogonal direction, but there is a substantial lower limit around 10 nm.

It is preferable for the polyolefin film according to the present invention to have a crystallization temperature $Tc_0$ of 115°C or more as determined by DSC analysis of the film and calculation by the extrapolation technique. It is more preferably 118°C or more and still more preferably 123°C or more. If $Tc_0$ is less than 115°C, bulky spherulites can be formed in the casting step, possibly leading to a large SPk or a large crystallite size. If the polyolefin film is used as release film, therefore, the transfer of dents to the adherend surface may occur. If the polyolefin film is used as capacitor film, furthermore, there may occur a decrease in dielectric strength.

To produce a polyolefin film with a $Tc_0$ of 115°C or more or in the preferable range specified above, a useful technique is to use component proportions in the range described later. In particular, it is preferable to add a material that can act as a nucleating agent and it is particularly preferable to add a branched chain type polypropylene material. In the case where a polypropylene resin is used as the primary component of the polyolefin film, it is also effective to adjust the contents of high molecular weight components and low molecular weight components in specific ranges. Though there are no particular limitations on the upper limit of the crystallization temperature $Tc_0$, there is a substantial upper limit around 135°C. It is noted that DSC stands for differential scanning calorimetry.

The $Tc_0$ can be measured by the procedure described below. In the DSC method, a polyolefin film specimen is heated in a nitrogen atmosphere from 25°C to 250°C at a rate of 20°C/min and maintained there for 5 minutes. Then, it is cooled from 250°C to 25°C at a rate of 10°C/min and the peak temperature identified in the exotherm curve recorded during the cooling step is defined as $T_{c10}$. Subsequently, the polyolefin film specimen is heated from 25°C to 250°C at a rate of 20°C/min and maintained there for 5 minutes. This is followed by cooling from 250°C to 25°C at a rate of 40°C/min and the peak temperature identified in the exotherm curve recorded during the cooling step is defined as $T_{c40}$. Subsequently, the cooling rate and the crystallization temperature determined at each cooling rate are plotted on the horizontal axis and the vertical axis, respectively, as shown in Fig. 1, and a straight line is drawn from $T_{c40}$ to $T_{c10}$, followed by its extrapolation to a cooling rate of 0°C/min. The extrapolated crystallization temperature is defined as $Tc_0$.

For the polyolefin film according to the present invention, the dynamic friction coefficient $\mu d$ in the direction orthogonal to the main orientation direction (hereinafter occasionally referred to as the orthogonal-to-main-orientation direction) after heat treatment at 130°C for 10 minutes is preferably 0.7 or less. It is more preferably 0.6 or less and still more preferably 0.5 or less. In the case where the polyolefin film is adopted as protective film, it may pass through various high temperature steps. If the polyolefin film is used as release film for heat-curable resin, for example, it may be attached to the heat-curable resin and then heat-cured in the temperature range of 120°C to 150°C. If the polyolefin film is applied as capacitor film, furthermore, it may be exposed to radiation heat of 130°C to 150°C in the metal sputtering step. To produce a polyolefin film with a smooth surface, a well-known technique is to decrease the crystallinity of the polyolefin film, but if this technique is actually performed, the application of high temperature heat can work to melt the resin portion with a low melting point located in the surface layer, and this will possibly lead to a large $\mu d$. If the $\mu d$ value is more than 0.7 after heating, the polyolefin film used as a release film or a capacitor film may suffer creasing when it is in the form of a roll being conveyed after passing through high temperature steps or suffer loose winding when it is wound up together with an adherend sheet.

To produce a polyolefin film with a $\mu d$ of 0.7 or less after heating, a useful method is, for example, to use component proportions in the range described later and process them under film production conditions in the range described later. In particular, it is effective to perform preheating at a high temperature and uniform, high-ratio stretching at a low temperature in the longitudinal/transverse stretching step and to implement heat treatment and relaxation in the range described later after the biaxial stretching step. The lower limit of the $\mu d$ after heating is not particularly limited, but there is a substantial upper limit around 0.1. Here, the $\mu d$ after heating can be determined according to JIS K 7125 (1999).

For the polyolefin film according to the present invention, it is preferable for the sum of the Young's modulus in the main orientation direction and that in its orthogonal direction to be 6.0 GPa or more. It is more preferably 6.5 GPa or more and still more preferably 7.0 GPa or more. If the sum of the Young's modulus in the main orientation direction and its orthogonal direction is less than 6.5 GPa, the polyolefin film, when used as a release film, is stretched as it passes through high temperature steps after being combined with an adherend, possibly leading to its peeling from the adherend. If the polyolefin film is used as capacitor film, furthermore, there may occur a decrease in dielectric strength. Here, the Young's modulus can be measured using a tensile tester in an atmosphere at room temperature, i.e. 23°C, and a relative humidity of 65% under the conditions of an initial tensile chuck-to-chuck distance of 50 mm and a tension rate of 300 mm/min.

To produce a film with the sum of the Young's modulus in the main orientation direction and its orthogonal direction of 6.0 GPa or more, a useful technique is to adopt component proportions in the range described later and process them under film production conditions in the range described later. In particular, it is effective to use materials with high crystallization temperatures and to perform preheating at a high temperature and uniform, high-ratio stretching at a low temperature in the longitudinal/transverse stretching step. There are no particular limitations on the upper limit of the sum of the Young's modulus in the main orientation direction and its orthogonal direction, but there is a substantial upper limit around 10 GPa.

For the polyolefin film according to the present invention, it is preferable that the shrinkage stress in the direction orthogonal to the main orientation be 0.6 N/mm$^2$ or less after heating at 100°C. It is more preferably 0.3 N/mm$^2$ or less and still more preferably 0.1 N/mm$^2$ or less. If the shrinkage stress in the direction orthogonal to the main orientation is more than 0.6 N/mm$^2$ after heating at 100°C, the film is likely to suffer deterioration in quality due to creasing, loosening, peeling from the adherend, or the like that may be caused by a gradual increase in the winding force as it passes through high temperature steps after being combined with the adherend and is wound up together with the adherend to form a roll. Here, the shrinkage stress in the direction orthogonal to the main orientation after heating at 100°C can be measured by thermomechanical analysis (TMA). Details of the measuring conditions will be specified in section EXAMPLE.

To produce a polyolefin film with a shrinkage stress of 0.6 N/mm$^2$ or less in the direction orthogonal to the main orientation after heating at 100°C, a useful technique is, for example, to adopt component proportions for the polyolefin film in the range described later and process them under film production conditions in the range described later. In particular, it is effective to use materials with high crystallization temperatures, perform preheating at a high temperature and uniform, high-ratio stretching at a low temperature in the longitudinal/transverse stretching step, and implement heat treatment and relaxation in the range described later after the biaxial stretching step. The lower limit of the shrinkage stress in the direction orthogonal to the main orientation after heating at 100°C is not particularly limited, but there is a substantial lower limit around 0.0001 N/mm$^2$.

For the polyolefin film according to the present invention, there are no particular limitations on the thickness, which should be adjusted appropriately depending on its use, but it is preferably 0.5 $\mu$m or more and 100 $\mu$m or less from the viewpoint of handleability. When the polyolefin film is used as release film, the upper limit of the thickness is more preferably 60 $\mu$m, still more preferably 30 $\mu$m, and particularly preferably 16 $\mu$m. The lower limit is more preferably

4 μm, still more preferably 8 μm, and particularly preferably 11 μm. When used as capacitor film, furthermore, the upper limit of the thickness is more preferably 15 μm, more preferably 8 μm, and still more preferably 3 μm. The lower limit is more preferably 0.9 μm and still more preferably 1.5 μm. The thickness of the polyolefin film may be adjusted appropriately depending on the extruder's screw rotation speed, width of the unstretched sheet, film production rate, stretching ratio, and the like, unless other properties are impaired. Here, the thickness of a polyolefin film can be measured using a micron thickness gauge.

Described below are suitable materials for producing the polyolefin film according to the present invention, though the invention is not limited thereto.

It is preferable for the polyolefin film according to the present invention to include polypropylene resin as primary component. For the present invention, the primary component means the particular component that accounts for more than 50 mass% and 100 mass% or less of the total mass of all components, and its content is more preferably 90 mass% or more and 100 mass% or less, still more preferably 95 mass% or more and 100 mass% or less, still more preferably 96 mass% or more and 100 mass% or less, particularly preferably 97 mass% or more and 100 mass% or less, and most preferably 98 mass% or more and 100 mass% or less. Here, the polyolefin film according to the present invention may include only one type of polypropylene resin, but preferably include two or more types of polypropylene resin. A film including two or more components that correspond to different types of polypropylene resin is regarded as having polypropylene resin as primary component if their components in total account for more than 50 mass% and 100 mass% or less.

The term "polypropylene resin" means a polyolefin resin material in which propylene units account for more than 50 mol% and 100 mol% or less of the total quantity, which accounts for 100 mol%, of all constituent units that constitute the molecular chains of the resin material. It is noted that polypropylene resin is hereinafter referred to occasionally as polypropylene material.

For the polyolefin film according to the present invention, there are no particular limitations on the layer structure, and it may have either a monolayer structure or a multilayer structure. From the viewpoint of satisfying different property requirements including smoothness, slipperiness, and heat resistance, it preferably has at least a surface layer (I) and a base layer (II). In the case of a polyolefin film having a monolayer structure, it is preferable that the polypropylene resin be the primary component of the whole polyolefin film itself. In the case of a polyolefin film having a multilayer structure, it is preferable that the polypropylene resin be the primary component of the whole polyolefin film itself and simultaneously that the polypropylene resin be the primary component of the base layer (II), which will be described later.

Described below is a polypropylene resin (referred to occasionally as polypropylene material A) that is suitable as the component that accounts for the largest part of the polyolefin film according to the present invention.

The lower limit of the number average molecular weight (Mn) of the polypropylene material A is preferably 750,000, more preferably 80,000, and still more preferably 850,000, from the viewpoint of limiting the quantity of low molecular weight components to not more than a certain percentage. The upper limit of Mn is preferably 100,000 and still more preferably 94,000. In addition, the lower limit of the (Z+1)-average molecular weight (Mz+1) is preferably 1,800,000 and more preferably 2,000,000 from the viewpoint of allowing high molecular weight components to account for not less than a certain percentage. The upper limit of Mz+1 is preferably 2,500,000 and more preferably 2,200,000.

The polypropylene material A preferably has a melt flow rate (MFR) in the range of 1 g/10 minutes or more and 10 g/10 minutes or less (at 230°C under a load of 21.18 N) from the viewpoint of film formation performance and film strength. The lower limit of the MFR is more preferably 2 g/10 minutes. The upper limit is more preferably 8 g/10 minutes and still more preferably 5 g/10 minutes. To produce such a polypropylene material A having a MFR in the above range, commonly adopted methods include controlling the average molecular weight and controlling the molecular weight distribution. More specifically, preferred methods include the method of appropriately adjusting the hydrogen gas concentration in the polymerization step and the method of controlling the molecular weight and/or molecular weight distribution of the polypropylene material by selecting an appropriate catalyst and/or promoter and selecting appropriate components. A lower molecular weight leads to a higher MFR, and a larger quantity of low molecular weight components in the molecular weight distribution also leads to a higher MFR.

The melting point of the polypropylene material A is preferably 155°C or more, more preferably 160°C or more, and still more preferably 165°C or more. If the polypropylene material A has a melting point of less than 155°C, the resulting polyolefin film will be low in heat resistance and, if used as release film for example, it will be stretched in some cases as it passes through high temperature steps after being combined with an adherend, possibly causing deformation of the adherend.

It is preferable for the polypropylene material A to have a cold xylene soluble fraction (hereinafter referred to as CXS) of 4 mass% or less and also have a mesopentad fraction of 0.90 or more. If this requirement is not met, the material may be inferior in film production stability or the resulting polyolefin film will be low in strength or suffer a large decrease in dimensional stability and heat resistance.

Here, when a specimen is dissolved completely in xylene and then precipitated at room temperature, the polyolefin component that remains dissolved in xylene is defined as the cold xylene soluble fraction (CXS), and it is considered to correspond to components that are not crystallized easily because of a low stereoregularity, low molecular weight, or the like. A film of resin that contains these components in large amounts is likely to be low in thermal dimensional stability. Accordingly, in view of the above, the CXS is preferably 3.5 mass% or less, more preferably 2.5 mass% or less, and still more preferably 2.0 mass% or less. The CXS is preferably as small as possible, but it is at least about 0.1 mass%. Useful methods for controlling the CXS in the above preferable range include the method of enhancing the catalytic activity during the resin preparation process and the method of washing the resulting resin with a solvent or the olefin monomer itself.

The polypropylene material A preferably has a mesopentad fraction of 0.94 or more, more preferably 0.96 or more, still more preferably 0.97 or more, and particularly preferably 0.98 or more. The mesopentad fraction is an indicator that represents the stereoregularity of the crystalline phase in polypropylene measured by nuclear magnetic resonance analysis (NMR analysis) and larger measurements suggest a higher degree of crystallinity, higher melting point, and higher dimensional stability at high temperatures, which are preferred. There are no particular limitations on the upper limit of the mesopentad fraction. Preferred methods for producing such high-stereoregularity resin include the method of washing powder of the resulting resin with a solvent such as n-heptane and the method of using an appropriately selected catalyst and/or promoter and using appropriately selected components.

The polypropylene material A may incorporate, for example, additional copolymerization components containing unsaturated hydrocarbons unless they impair the purpose of the present invention. Useful monomer components that constitute such copolymerization components include, for example, ethylene, propylene (for copolymerized blends), 1-butene, 1-pentene, 3-methytpentene-1,3-methy)butene-1,1-hexene, 4-methylpentene-1,5-ethylhexene-1,1-octene, 1-decene, 1-dodecene, vinylcyclohexene, styrene, allylbenzene, cyclopentene, norbornene, and 5-methyl-2-norbornene.

In the polypropylene material A, these copolymerization components preferably account for 10 mol% or less. Their contents are more preferably 5 mol% or less and still more preferably 3 mol% or less. As the content of the ethylene component increases, the degree of crystallinity decreases and transparency can be improved more easily. As the content of the ethylene component exceeds 10 mol%, however, the resulting film tends to be low in strength or low in heat resistance, possibly leading to deterioration in the heat shrinkage rate. In addition, the resin tends to be degraded in the extrusion step, possibly leading to fisheyes in the polyolefin film.

The polyolefin film according to the present invention may include a polypropylene resin (hereinafter occasionally referred to as polypropylene material B) other than the polypropylene material A. If such a polypropylene material B is included, the low molecular weight component can act as a stretching auxiliary in the stretching step in some cases to prevent film breakage and uneven property distribution in the stretching step.

The upper limit of the number average molecular weight (Mn) of the polypropylene material B is preferably 75,000, more preferably 70,000, and still more preferably 65,000 from the viewpoint of allowing the low molecular weight component to account for at least a certain percentage. The lower limit of Mn is preferably 50,000, more preferably 55,000, and still more preferably 62,000. In addition, the upper limit of the (Z+1)-average molecular weight (Mz+1) is preferably 2,000,000 and more preferably 1,800,000 from the viewpoint of allowing the high molecular weight component to account for at most a certain percentage. The lower limit of Mz+1 is preferably 1,100,000, more preferably 1,300,000, and still more preferably 1,550,000. It is noted that the Mn and Mz+1 of the polypropylene material B are smaller than the Mn and Mz+1 of the polypropylene material A.

The polypropylene material B preferably has a melt flow rate (MFR) in the range of 3 g/10 minutes or more and 11 g/10 minutes or less (at 230°C under a load of 21.18 N) from the viewpoint of extrusion stability. The lower limit of the MFR of the polypropylene material B is more preferably 3.5 g/10 minutes. The upper limit is more preferably 9 g/10 minutes and still more preferably 8 g/10 minutes. To produce such a polypropylene material B having a MFR in the above range, commonly adopted methods include controlling the average molecular weight and controlling the molecular weight distribution. More specifically, preferred methods include the method of appropriately adjusting the hydrogen gas concentration in the polymerization step and the method of controlling the molecular weight and/or molecular weight distribution of the polypropylene material by selecting an appropriate catalyst and/or promoter and selecting appropriate components. A lower molecular weight leads to a higher MFR, and a larger quantity of low molecular weight components in the molecular weight distribution also leads to a higher MFR.

The polyolefin film according to the present invention may contain a branched chain polypropylene resin (hereinafter occasionally referred to as branched chain polypropylene material) in addition to the polypropylene material A and/or polypropylene material B, which are both straight chain polymers. A branched chain polypropylene material acts as a crystal nucleating agent for α-crystals or β-crystals. This suggests that the inclusion of a branched chain polypropylene material, which acts as a nucleating agent, serves to prevent bulky spherulites from being formed in the casting step to ensure a small SPk value and a small crystallite size.

Such a branched chain polypropylene material preferably has a MFR of 0.5 g/10 minutes or more and 9 g/10 minutes or less (at 230°C under a load of 21.18 N) from the viewpoint of extrusion stability. For the branched chain polypropylene material, the lower limit of the MFR is more preferably 2 g/10 minutes and still more preferably 6 g/10 minutes. For the branched chain polypropylene material, the upper limit of the MFR is more preferably 8 g/10 minutes.

To produce such a branched chain polypropylene material having a MFR in the above range, commonly adopted methods include controlling the average molecular weight and controlling the molecular weight distribution. More specifically, preferred methods include the method of appropriately adjusting the hydrogen gas concentration in the polymerization step and the method of controlling the molecular weight and/or molecular weight distribution of the polypropylene material by selecting an appropriate catalyst and/or promoter and selecting appropriate components. A lower molecular weight leads to a higher MFR, and a larger quantity of low molecular weight components in the molecular weight distribution leads to a higher MFR.

It is preferable for the branched chain polypropylene material to have a melt tension of 3 gf or more and 40 gf or less from the viewpoint of uniform stretching. The lower limit of the melt tension is more preferably 4 gf and still more preferably 6 gf. The upper limit is more preferably 30 gf and still more preferably 25 gf. To produce such a polypropylene material having a melt tension in the above range, commonly adopted methods include controlling the average molecular weight and/or the molecular weight distribution and controlling the degree of branching in the material. If the material contains long chain branching, in particular, the melt tension can be increased drastically, and accordingly, it can be adjusted to a preferred value by controlling the branched long molecular chains and the degree of long chain branching.

There are several commercial products of branched chain polypropylene materials including Ziegler-Natta catalyst type ones and metallocene based catalyst type ones, but from the viewpoint of the combined use of the polypropylene material A and the polypropylene material B, it is more preferable to adopt a metallocene based catalyst type one because of having a narrow molecular weight distribution with smaller fractions of low molecular weight components and high molecular weight components.

The polyolefin material used in the polyolefin film according to the present invention may contain various additives such as crystal nucleating agent, antioxidant, thermal stabilizer agent, lubricant, antistatic agent, antiblocking agent, filler, viscosity adjuster, and color protection agent, unless they impair the purposes of the present invention.

If an antioxidant is to be used in particular, it is important to identify an appropriate type and quantity from the viewpoint of bleed-out of the antioxidant. Specifically, the antioxidant to be used is preferably a phenolic type one having steric hindrance, and it is preferable to adopt at least one high molecular weight antioxidant with a molecular weight of 500 or more. A variety of examples thereof can be given, but it is preferable to use, for example, 2,6-di-t-butyl-p-cresol (BHT: molecular weight 220.4) in combination with 1,3,5-trimethyl-2,4,6-tris-(3,5-di-t-butyl-4-hydroxybenzyl) benzene (for example, Irganox (registered trademark) 1330 (manufactured by BASF, molecular weight 775.2)) or tetrakis[methylene-3(3,5-di-t-butyl-4-hydroxyphenyl) propionate] methane (for example, Irganox (registered trademark) 1010 (manufactured by BASF, molecular weight 1177.7)).

The total content of these antioxidants is preferably in the range of 0.03 to 1.0 parts by mass relative to the total quantity of the polyolefin materials. If the amount of antioxidants is too small, the polymer may be degraded in the extrusion step, possibly leading to coloring of the film or a decrease in long term heat resistance. If the antioxidant content is too large, bleed-out of these antioxidants may occur, possibly leading to a decrease in transparency. From the viewpoint of the above points, the content of these antioxidants is more preferably 0.05 to 0.9 parts by mass and particularly preferably 0.1 to 0.8 parts by mass.

The polyolefin film according to the present invention may contain a crystal nucleating agent unless it impairs the purpose of the present invention. Specific examples of such a crystal nucleating agent include $\alpha$-crystal nucleating agents (dibenzylidene sorbitols, sodium benzoate, etc.), $\beta$-crystal nucleating agents (1,2-potassium hydroxystearate, magnesium benzoate, N,N'-dicyclohexyl-2,6-naphthalene dicarboxamide, other amide based compounds, and quinacridone based compounds). However, excessive addition of such other nucleating agents can cause a decrease in stretchabiliy and a decrease in transparency and strength due to void formation etc. and therefore, their content is commonly 0.5 part by mass or less, preferably 0.1 part by mass or less, more preferably 0.05 part by mass or less, relative to the total quantity of the polypropylene materials.

It is preferable for the polyolefin film according to the present invention to be free of organic particles and inorganic particles. A polypropylene resin that is suitable as the primary component of the polyolefin film according to the present invention is low in affinity with organic particles and inorganic particles, and therefore, particles are likely to come off to contaminate the equipment or products. In addition, if large asperities are formed by hard particles, surface irregularities are likely to be transferred to resin layers in optical members. This may cause quality deterioration in cases where such a resin is included in protective films of products such as display members that require high quality or base films for production processes. In view of the above facts, it is preferable for the polyolefin film according to the present invention to be free of organic particles and inorganic particles.

In the polyolefin film according to the present invention, the polypropylene material A, polypropylene material B, and branched chain polypropylene material each account for proportions as specified below in the total quantity of the resin components. The polypropylene material A preferably accounts for 50 mass% or more and 99.9 mass% or less from the viewpoint of surface smoothness and mechanical strength of the film. For the polypropylene material A, the lower limit of the content is more preferably 60 mass% and still more preferably 70 mass%. The upper limit is more preferably 99 mass% and still more preferably 98 mass%. The polypropylene material B preferably accounts for 0.1 mass% or more and 50 mass% or less of the total quantity of the resin components. For the polypropylene material B, the lower limit of the content is more preferably 0.5 mass% and still more preferably 3 mass%. The upper limit is more preferably 30 mass% and still more preferably 20 mass%. The branched chain polypropylene material preferably accounts for 0.1 mass% or more and 30 mass% or less of the entire film. For the polypropylene material B, the lower limit of the content is more preferably 0.2 mass%, still more preferably 0.5 mass%, and most preferably 1.0 mass%. The upper limit is more preferably 20 mass% and still more preferably 10 mass%.

In addition to the aforementioned polypropylene material A, the polyolefin film according to the present invention preferably contains either the polypropylene material B or branched chain polypropylene resin material or contains both the polypropylene material B and branched chain polypropylene resin material.

In the molecular weight distribution curve observed by the gel permeation chromatography, which will be described later, the polyolefin film according to the present invention preferably gives a differential distribution value of 3% or more and 15% or less when the logarithmic molecular weight Log(M) is 4.0. If the differential distribution value is less than 3% at a logarithmic molecular weight Log(M) of 4.0, low molecular weight components, which act as a lubricant in the stretching step, may fail to be present in a sufficient amount, easily leading to rupture during stretching in some cases. If the differential distribution value is more than 15% at a logarithmic molecular weight Log(M) of 4.0, the polyolefin film is inferior in heat resistance in some cases. From the above point of view, the lower limit of the differential distribution value at a logarithmic molecular weight Log(M) of 4.0 is more preferably 4% and still more preferably 5%. The upper limit of the differential distribution value at a logarithmic molecular weight Log(M) of 4.0 is more preferably 13% and still more preferably 10%.

In the molecular weight distribution curve observed by the gel permeation chromatography, the polyolefin film according to the present invention preferably gives a differential distribution value of 1% or more and 15% or less when the logarithmic molecular weight Log(M) is 6.1. If the differential distribution value is less than 1 % at a logarithmic molecular weight Log(M) of 6.1, high molecular weight components, which act as tie molecules during stretching, will not exist in a sufficient amount, leading to poor uniformity during stretching in some cases. If the differential distribution value is more than 15% at a logarithmic molecular weight Log(M) of 6.1, the polyolefin film in the form of a wound roll will suffer a gradual increase in shrinkage at room temperature, leading to deterioration in the planarity of the film roll in some cases. From the above point of view, the lower limit of the differential distribution value at a logarithmic molecular weight Log(M) of 6.1 is more preferably 5% and still more preferably 7%. The upper limit of the differential distribution value at a logarithmic molecular weight Log(M) of 6.1 is more preferably 13% and still more preferably 11%.

For the polyolefin film according to the present invention, it is preferable to use materials as described above and perform biaxial stretching. Useful biaxial stretching methods include inflation type simultaneous biaxial stretching, tenter type simultaneous biaxial stretching, and sequential biaxial stretching by a roll type stretching machine and a tenter. Any of these will be useful, but it is preferable to adopt sequential biaxial stretching by a roll type stretching machine and a tenter from the viewpoint of film production stability, thickness uniformity, and control of film's high rigidity and dimensional stability.

Next, an embodiment of the production method for the polyolefin film according to the present invention will be described with reference to a two-component, three-layer polypropylene film, although the invention is not limited thereto.

First, 80 parts by mass of the polypropylene material A, 15 parts by mass of the polypropylene material B, and 5 parts by mass of the branched chain polypropylene material are dry-blended and supplied to a single screw extruder provided for the base layer (II) (hereinafter occasionally referred to as layer B), and the polyolefin material B is supplied to a single screw provided for the surface layer (I) (hereinafter occasionally referred to as layer A). Then, they are melt-extruded separately at 200°C to 280°C, preferably 220°C to 280°C, and more preferably 240°C to 270°C. Subsequently, after removing foreign objects, modified polymers, etc., by a filter installed at a halfway position in the polymer pipe, they are extruded in layers through a multimanifold type compound T-die designed for a "layer A/layer B/layer A" constitution and discharged onto a casting drum for cooling and solidification to provide a layered unstretched sheet having a "layer A/layer B/layer A" layered constitution. In this step, the layer thickness ratio is preferably in the range of 1/8/1 to 1/60/1. If it is in this range, a thin, uniform surface layer that contains the polypropylene material A is formed on the film surface to ensure that asperities with highly uniform height can be formed in the stretching step while preventing the formation of large asperities.

It is preferable for the casting drum to have a surface temperature of 10°C to 50°C, preferably 10°C to 40°C, more preferably 15°C to 30°C, and still more preferably 15°C to 20°C. The layer structure may be a two layered one having a "layer A/layer B" constitution. Useful methods to bring the sheet into strong contact with the casting drum include the application of static electricity, use of surface tension of water, air knife method, press roll method, and casting into water, of which the air knife method is preferred because it can produce a highly planar surface and control the surface roughness. The air knife is preferably operated at a low air temperature so that in the sheet on the casting drum, the surface that is not in contact with the casting drum is cooled. The air temperature of the air knife is 10°C to 50°C, preferably 10°C to 40°C, more preferably 15°C to 30°C, and still more preferably 15°C to 25°C, and the air blowing speed is preferably 130 to 150 m/s. It is also preferable for the position of the air knife to be adjusted appropriately so that air will flow downstream of the film in order to prevent vibrations of the film. In the case of a two-component, two-layer structure having a "layer A/layer B" constitution, it is preferable that the layer A be in contact with the casting drum.

The resulting unstretched sheet is then introduced into a longitudinal stretching step. In the longitudinal stretching step, the unstretched sheet is preheated by bringing it into contact with a plurality of metal rolls maintained at 80°C or more and 150°C or less, preferably 80°C or more and 130°C or less, more preferably 90°C or more and 130°C or less, and still more preferably 100°C or more and 130°C or more. Then, it is stretched between rolls having different circumferential speeds first 1.1 to 3.0 times, more preferably 1.3 to 2.5 times, in the length direction and then 2.0 to 5.0 times, more preferably 3.0 to 4.5 times, in the length direction, followed by cooling to room temperature. The first stage stretching temperature is 80°C or more and 130°C or less, preferably 90°C or more and 130°C or less, and more preferably 100°C or more and 130°C or less, and the second stage stretching temperature is 130°C or more and 150°C or less, preferably 140°C or more and 150°C or less, and more preferably 145°C or more and 150°C or less. The stretching at a low temperature under a high stress in the first stage of the longitudinal stretching step followed by quick, high-ratio stretching at a high temperature ensures longitudinal orientation that is uniform across the entire width, thereby providing a highly uniform, highly oriented uniaxial stretched film.

If there is a large difference between the longitudinal stretching temperature in the first stage and the longitudinal stretching temperature in the second stage, the film will shrink in the width direction when it comes in contact with a high temperature stretching roll. At this time, the film is likely to undergo ununiform shrinkage to cause creasing in the length direction in some cases. To avoid this, ceramic rolls were used as the stretching rolls. On a ceramic roll, the film slips easily and shrinks uniformly, and accordingly, the film can be stretched without creasing. If the total stretching ratio in the two stage stretching step is less than 3.0, the film will fail to be oriented sufficiently and suffer a decrease in strength, and accordingly, it is preferably 3.0 or more and 6.0 or less and more preferably 4.0 or more and 5.5 or less.

Subsequently, the uniaxially stretched film is introduced into a tenter with both width-directional ends held by clips and it is preheated and stretched 7.0 to 13 times in the width direction. The preheating temperature is 165°C to 180°C, more preferably 168°C to 180°C, and still more preferably 170°C to 180°C. Furthermore, the stretching temperature is 148°C to 165°C, more preferably 148°C to 160°C, and still more preferably 148°C to 155°C. It is preferable for the preheating temperature to be higher by 5°C or more, preferably 8°C or more, and more preferably 10°C or more, than the stretching temperature because this allows the stretched film to be oriented to a high degree and uniformly across the entire width, making it possible to provide a polyolefin film with smooth surface.

In the next heat treatment and relaxation treatment step, the film, with the edges held by clips to maintain tension in the width direction, is heat-fixed at a temperature of 160°C or more and 180°C or less, preferably 165°C or more and less than 180°C, more preferably 168°C or more and less than 180°C, and still more preferably 170°C or more and less than 180°C while relaxing it in the width direction to a relaxation rate of 5% to 20%, preferably 8% to 18%, and more preferably 11% to 18%. With the edges still held by clips to maintain tension in the width direction, the film is cooled to 80°C to 100°C in the cooling step and moved out of the tenter, followed by removing the clips from the film edges and sending the film to the winding step in which the film is slit to remove the edges and wound up to provide a polyolefin film roll product. To implement heat fixation, heat treatment is performed at a temperature higher by 5°C or more, preferably 8°C or more, and more preferably 10°C or more, than the transverse stretching temperature, which serves to relax the residual stress in the film and reduce the heat shrinkage rate.

From the viewpoint of heat resistance, it is also preferable for the polyolefin film coming out of the tenter to be heated on hot rolls as it passes the connecting path. The heating temperature is preferably 70°C or more, more preferably 80°C or more, still more preferably 100°C or more, and particularly preferably 120°C or more. If the temperature is 140°C or more, slipperiness between the hot rolls and the polyolefin film will deteriorate and creasing will occur to reduce the planarity, and accordingly, the upper limit is about 140°C. The heating time is preferably 0.2 second or more, more preferably 0.4 second more, and still more preferably 0.5 second or more. There are no particular limitations on the upper limit of the heating time, but there is a substantial upper limit around 2.0 from the viewpoint of productivity.

Polyolefin films thus obtained can be used in various industrial applications such as packaging films, surface protective films, process films, sanitary products, agricultural products, construction products, medical products, and capacitor films. In particular, since they have highly smooth surfaces, they can be suitably used as surface protective films, process films, release films, and capacitor films. Here, surface protective films mean those to be attached to objects such as molded products and films to serve for protection against scratching, contamination, etc., that can occur during processing and transportation. Process films mean those to be attached to objects such as molded products and films to serve for protection against scratching, contamination, etc., that can occur during production and processing. They are discarded when such objects are used as final products. Release films mean those with high releasability to be attached to objects such as molded products and films to serve for protection against scratching, contamination, etc., that can occur during processing and transportation. They can be easily peeled off and discarded when such objects are used as final products. Capacitor films mean those used in film capacitors that contain resin films as dielectric parts.

EXAMPLES

The invention is described in more detail below with reference to Examples. The methods used to determine and evaluate various characteristics are as follows.

(1) Thickness of film

A micron thickness gauge (manufactured by Anritsu Corporation) was used for thickness measurement. A 10 cm × 10 cm sample was taken from a film and measurements were taken at five appropriately selected points, followed by calculating the average.

(2) Height of asperities SPk, average roughness Sa, and maximum height Sz

Measurement was performed using a scanning white light interference microscope (VS1540, manufactured by Hitachi High-Tech Science Corporation; measuring conditions and instruments are described later), and photographed image was complemented (complete complementation) by attached analysis software, followed by surface correction by polynomial fourth-order approximation and processing by a median filter (3 × 3 pixels) to provide a surface profile.
A 5 cm × 5 cm square sample was cut out of a polyolefin film and measurement was started at the intersection of the diagonals. A total of nine measuring points were fixed by the procedure described below and measurements were taken at each measuring position. In addition, the measuring procedure was performed for the other surface. Then, SPk, Sa, and Sz were measured at each measuring position on each surface by the procedure described above, and the average values of SPk, Sa, and Sz were calculated for each surface. Of the SPk values, the smaller one was adopted as the SPk value of the film.

<Decision of measuring positions>

Measurement 1: starting point
Measurement 2: the position 3.0 mm to the right from the starting point
Measurement 3: the position 6.0 mm to the right from the starting point
Measurement 4: the position 3.0 mm downward from the starting point
Measurement 5: the position 3.0 mm downward and 3.0 mm to the right from the starting point
Measurement 6: the position 3.0 mm downward and 6.0 mm to the right from the starting point
Measurement 7: the position 6.0 mm downward from the starting point
Measurement 8: the position 6.0 mm downward and 3.0 mm to the right from the starting point
Measurement 9: the position 6.0 mm downward and 6.0 mm to the right from the starting point

<Measuring conditions and instruments>

Objective lens: 10x
Lens tube: 1x
Zoom lens: 1x
Wavelength filter: 530 nm white
Measuring mode: Wave
Measuring software: VS-Measure 10.0.4.0
Analyzing software: VS-Viewer 10.0.3.0
Measuring region: 561.1 μm × 561.5 μm
Pixel number: 1,024 × 1,024

(3) Heat shrinkage rate at 130°C after 15 minutes in main orientation direction (130°C heat shrinkage rate)

Five polyolefin film specimens with a width of 10 mm and a length of 200 mm (measuring direction) with respect to the main orientation direction of the film are prepared, and gage marks are made at the positions 25 mm from both ends, followed by measuring the distance between the gage marks with an all-purpose projector, which is referred to as the test length ($l0$). Then, a test piece was sandwiched between paper sheets and it was heated in a no load state for 15 minutes in an oven maintained at 130°C. It was then taken out and cooled at room temperature, followed by measuring the size (I1) with an all-purpose projector and calculating the heat shrinkage rate by the following equation. The procedure was performed repeatedly to take measurements from a total of five specimens and the average of the heat shrinkage rate values obtained was adopted as the heat shrinkage rate in the main orientation direction. Here, to determine the main orientation direction, a direction of 0° is set arbitrarily in the film plane and the Young's modulus is measured by the method described below in section (7) in 5° steps in the angle range of 0° to 175° from the direction of 0°. The direction in which the highest value was obtained was adopted as the main orientation direction.

$$\text{Heat shrinkage rate} = \{(I0\text{-}I1)/I0\} \times 100\ (\%)$$

(4) $\alpha(110)$ crystallite size in the main orientation direction and in its orthogonal direction

A polyolefin film was cut to provide strips each having a length of 4 cm and a width of 1 mm, which were stacked to a thickness of 1 mm to prepare a specimen. A film specimen was mounted between the X-ray source and the detector in such a manner that X-ray would pass through the polyolefin film appropriately and X-ray diffraction was measured while scanning the angle ($2\theta/\theta$) between the X-ray source and the detector symmetrically with respect to the film plane. For each scanning direction, i.e. the main orientation direction and its orthogonal direction, the half-width $\beta_e$ of the crystal peak at $2\theta$ = about 14° ((110) plane of $\alpha$-crystal) was measured and used to calculate the crystallite size in the main orientation direction and that in its orthogonal direction by the equations (1) and (2) given below, followed by calculating the sum of the two values.
[Mathematical formula 1]

$$\text{crystallite size} = \frac{\text{K}\lambda}{\beta\cos\theta} \quad \cdot \cdot \cdot \quad (1)$$

[Mathematical formula 2]

$$\beta = \sqrt{{\beta_e}^2 + {\beta_0}^2} \quad \cdot \cdot \cdot \quad (2)$$

Here, A is the X-ray wavelength (= 0.15418 nm); $\beta_e$ is the half-width of diffraction peak; $\beta_o$ is the corrected half-width (= 0.6); and K is the Scherrer constant (= 1.0).

(Measuring apparatus)

• X-ray diffractometer: model 4036A2, manufactured by Rigaku Corporation

  X-ray source: CuKa ray (Ni filter used)
  Output: 40 kV - 30 mA

• Goniometer: model 2155D, manufactured by Rigaku Corporation

  Slit: 2 mm diameter -1° -1°
  Detector: scintillation counter

• Counting recorder: model RAD- C, manufactured by Rigaku Corporation

(5) Crystallization temperature $T_{c0}$ determined by extrapolation

Using a differential scanning calorimeter (EXSTAR DSC6220, manufactured by Seiko Instruments Inc.), 3 mg of a polyolefin film sample was heated in a nitrogen atmosphere from 25°C to 250°C at a rate of 20°C/min and maintained there for 5 minutes. Then, the temperature was decreased from 250°C to 25°C at a rate of 10°C/ min. This procedure was performed five times repeatedly while measuring the peak temperature in the exotherm curve observed in the cooling step in each measuring run, followed by calculating the arithmetic average of the measurements, which is referred to as $T_{c10}$. Subsequently, a polyolefin film specimen sampled elsewhere by the same procedure was heated from 25°C to 250°C at a rate of 20°C/min and maintained there for 5 minutes. Then, the temperature was decreased from 250°C to 25°C at a rate of 40°C/min. This procedure was performed five times repeatedly while measuring the peak temperature in the exotherm curve observed in the cooling step in each measuring run, followed by calculating the arithmetic average of the measurements, which is referred to as $T_{c40}$. Subsequently, the cooling rate and the crystallization temperature determined at each cooling rate, $T_{c10}$ and $T_{c40}$, were plotted on the horizontal axis and the vertical axis, respectively, as shown in Fig. 1, and a straight line was drawn from $T_{c40}$ to $T_{c10}$, followed by extrapolating the crystallization temperature to a cooling rate of 0°C/min to determine the value of $T_{c0}$. Here, if two or more peak temperatures were observed in any measuring run for $T_{c10}$ and $T_{c40}$, the temperature of the peak located at the highest temperature in the region from 80°C to 130°C was adopted as peak temperature.

(6) Dynamic friction coefficient $\mu d$ in the orthogonal-to-main-orientation direction after heat treatment at 130°C for 10 minutes

The polyolefin film test pieces with a width of 6.5 cm and a length of 12 cm was cut out, sandwiched between paper sheets, heated in a no load state for 10 minutes in an oven maintained at 130°C, and cooled at room temperature, followed by taking measurements according to JIS K 7125 (1999) at 25°C and 65%RH using a slip tester manufactured by Toyo Seiki Seisaku-sho, Ltd. Here, measurement was performed on two film sheets that are stacked in such a manner that the orthogonal-to-main-orientation direction of each sheet coincided with each other and also that different surfaces face each other, that is, the front side surface of a film sheet was in contact with the rear side surface of the other film sheet. The same measuring procedure was performed five times repeatedly for each sample and the average of the measurements taken was calculated to represent the dynamic friction coefficient ($\mu d$) of the sample.

(7) The sum of the Young's modulus in the main orientation direction and its orthogonal direction

Five rectangular portions with a length of (measuring direction) of 150 mm and a width of 10 mm were cut out in such a manner that the long side was parallel to either the main orientation direction or its orthogonal direction to provide film samples. Using a universal tester (Tensilon (registered trademark) UCT-100, manufactured by Orientec Co., Ltd.), tensile test was performed on the samples for measuring Young's modulus in the main orientation direction of the film and on the samples for measuring Young's modulus in the orthogonal-to-main-orientation direction in an atmosphere at room temperature, i.e. 23°C, and a relative humidity of 65% under the conditions of an initial tensile chuck-to-chuck distance of 50 mm and a tension rate of 300 mm/min. When a sample was stretched by 2% (when the chuck-to-chuck distance reached 51 mm), the load applied to the film was read and divided by the cross section of the sample measured before the test (film thickness × 10 mm) to give a quotient which was defined as F2, and the inclination of the straight line passing through the origin and the point used for measuring the F2 value was assumed to represent Young's modulus. Five test runs each were performed for the main orientation direction and its orthogonal direction, and the arithmetic average of the measurements taken for each direction was calculated to represent Young's modulus.

(8) Shrinkage stress in the orthogonal-to-main-orientation direction during heating at 100°C

A curve of heat shrinkage force in the direction orthogonal to the main orientation direction in a film sample was observed using a TMA instrument (SS6100, manufactured by SII NanoTechnology Inc.) under the conditions given below.
    (a) Sample: width 4 mm × length 20 mm
    (b) Temperature program: raising temperature from 30°C at a heating rate of 10°C/min The heat shrinkage force (mN) at 100°C was read from the heat shrinkage stress curve. Three measurements were taken and their average was calculated.

(9) Melt tension

Using an instrument as specified in JIS K 7199 (1999), measurements were taken under the conditions given below.

•    Instrument: Capilograph 1BPMD-i (manufactured by Toyo Seiki Co., Ltd.) equipped with a melt tension tester

- Temperature: 230°C (using heat insulation chamber)
- Die: L = 8 (mm), D = 2.095 (mm)
- Extrusion rate: 20 mm/min
- Take-up speed: 15.7 m/min
- Sample mass: 15 to 20 g

(10) Number average molecular weight Mn, (Z+1)-average molecular weight Mz+1, and molecular weight distribution

A polyolefin film was dissolved in 1,2,4-trichlorobenzene used as solvent by stirring at 165°C for 30 minutes. Then, the resulting solution was filtered through a 0.5 μm filter. The molecular weight distribution in the filtrate was measured, and the differential distribution value was read at logarithmic molecular weights Log(M) of 4.0 and 6.1.
In addition, using a molecular weight calibration curve prepared from a standard specimen as specified below, the number average molecular weight and the (Z+1)-average molecular weight of the specimen were determined.

- Instrument: high temperature GPC equipment (equipment No. HT-GPC-1, PL-220 manufactured by Polymer Laboratories)
- Detector: differential refractometer RI
- Column: Shodex HT-G (guard column)
  Shodex HT-806M (two columns) (diameter 8.0 mm × 30 cm, manufactured by Showa Denko K.K.)
- Flow rate: 1.0 mL/ min
- Column temperature: 145°C
- Injection rate: 0.200 mL
- Standard specimen: monodisperse polystyrene, manufactured by Tosoh Corporation, and dibenzyl, manufactured by Tokyo Chemical Industry Co., Ltd.

(11) Evaluation for transfer to adherend

Samples of polyolefin film and Zeonor Film (registered trademark) (20 μm thick, manufactured by Zeon Corporation), both square with a width of 100 mm and a length of 100 mm, were combined in such a manner that, of the two surfaces of the polyolefin film sample, the surface smaller in SPk was in contact with the Zeonor Film (registered trademark) sample, and they were sandwiched between two acrylic resin plates (with a width of 100 mm and a length of 100 mm). The layered specimen was left to stand under a load of 3 kg for 24 hours in an atmosphere at 23°C. After 24 hours, the surface of the Zeonor Film (registered trademark) sample (the surface left in contact with the polyolefin film) was inspected by visual observation and evaluated according to the criterion specified below. Here, if the two surfaces had the same SPk value, the surface smaller in average surface roughness Sa was adopted as contact surface. If the two surfaces still had the same value, the surface smaller in maximum surface roughness Sz was adopted as contact surface.

   A: as clean as before applying a load
   B: slight irregularity detected
   C: significant irregularity detected

(12) Planarity of film

A polyolefin film sample with a width of 500 mm and a length of 200 m was wound around a core, heated in an oven at 60°C for 7 days, then taken out, cooled to room temperature, and wound up around a core. Then, a 1 m portion of this 500 mm wide polyolefin film was wound off and hung without tension (hung in the vertical direction with film's dead load alone) or with a tension of 1 kg/m or 3 kg/m applied across the entire film width uniformly without unevenness, followed by visual observation for poor planarity portions such as dents and undulations.

   S: There is no poor planarity portion in tension free state.
   A: A poor planarity portion is found in the tension free state, but it disappears under a tension of 1 kg per meter of width.
   B: A poor planarity portion is found under a tension of 1 kg per meter of width, but it disappears under a tension of 3 kg per meter of width.
   C: A poor planarity portion is found and it does not disappear under a tension of 3 kg per meter of width.

(Polypropylene materials etc.)

Polypropylene materials each having a number average molecular weight (Mn) and a (Z+1)-average molecular weight (Mz+1) as specified in Table 1 given below were used to prepare polyolefin film samples in Examples and Comparative examples. It is noted that these values were determined for the materials in the form of resin pellets. Two materials for the PP material A and two materials for the PP material B were prepared. In addition, the materials given below were prepared as branched chain polypropylene materials.

Polypropylene material 1 (PP1): manufactured by Prime Polymer Co., Ltd.
Polypropylene material 2 (PP2): manufactured by Prime Polymer Co., Ltd.
Polypropylene material 3 (PP3): manufactured by Sumitomo Chemical Co., Ltd.
Polypropylene material 4 (PP4): manufactured by Prime Polymer Co., Ltd.
Branched chain polypropylene material 1 (branched PP1): metallocene catalyst type branched chain polypropylene material (manufactured by Japan Polypropylene Corporation, melt tension 13 gf)
Branched chain polypropylene material 2 (branched PP2): metallocene catalyst type branched chain polypropylene material (manufactured by Japan Polypropylene Corporation, melt tension 5 gf)
Branched chain polypropylene material 3 (branched PP3): Ziegler-Natta catalyst type branched chain polypropylene material (manufactured by Basell, melt tension 15 gf)

[Table 1]

[Table 1]

|  |  | Mn | Mz+1 |
|---|---|---|---|
| PP material A | PP1 | 9.5.E+04 | 2.3.E+06 |
|  | PP2 | 8.5.E+04 | 2.2.E+06 |
| PP material B | PP3 | 6.5.E+04 | 1.5.E+06 |
|  | PP4 | 6.1.E+04 | 1.6.E+06 |

Polypropylene material D: prepared by supplying the polypropylene material 3 and 4-methyl-1-pentene based polymer 1 (described later) at a ratio of 90:10 (by mass) from a scale hopper to a twin screw extruder, melt-kneading it at 260°C, discharging the resulting molted resin composition through a die, cooling the resulting strand for solidification in a water tank at 25°C, and cutting it into chips.

4-methyl-1-pentene based polymer 1: MX004, manufactured by Mitsui Chemicals, Inc.
4-methyl-1-pentene based polymer 2: TPX (registered trademark) EP0518, manufactured by Mitsui Chemicals, Inc. (MFR = 4 g/10 minutes (P = 2.16 Kg, 230°C))
1-butene based polymer: Tafmer (registered trademark) BL3450, manufactured by Mitsui Chemicals, Inc. (MFR = 12 g/10 minutes (load 21.18 N, 230°C), 1-butene-derived structural unit: 87 mol%)

(Example 1)

As materials for the surface layer (I), the polypropylene material 3 3 and the polypropylene material D were dry-blended at a ratio of 80:20 (by mass) and supplied to a uniaxial single screw extruder for surface layer (I) production. As materials for the base layer (II), the polypropylene material 2, polypropylene material 3, and branched chain polypropylene material 1 were dry-blended at a ratio of 70: 27:7 (by mass) and supplied to a uniaxial single screw extruder for inner layer (II) production. The resin mixtures were separately melt-extruded at 260°C, filtered through 20 μm-cut sintered filters to remove foreign objects, combined into a layered structure in a feedblock type A/B/A compound T-die while adjusting the thickness ratio of surface layer (I)/ base layer (II)/surface layer (I) to 1/20/1, discharged onto a casting drum having a surface temperature controlled at 15°C, and brought in close contact with the casting drum by an air knife. Then, for the sheet on the casting drum, the surface not in contact with the cooling drum is cooled by applying pressurized air at 15°C injected at an air speed of 140 m/s to provide an unstretched sheet. Subsequently, the unstretched sheet was preheated to 108°C on ceramic rolls and, as the first stage stretching, it was stretched 1.5 times in the length direction between rolls at 108°C having different circumferential speeds. Subsequently, as the second stage stretching, it was stretched 3.5 times in the length direction between rolls at 146°C. Then, the resulting uniaxial stretched film, with its width-directional ends held by clips, was introduced into a tenter type stretching machine, preheated at 172°C for 3 seconds, stretched 9.3 times at 152°C in the width direction, and heat-treated at 175°C while relaxing it by 13% in the width direction. Subsequently, it was cooled to 100°C, sent out of the tenter, released from the clips holding the film's width-directional edges, heated on hot rolls at 123°C for 0.5 second while passing the connecting path, and wound up around a core to provide a polyolefin film with a thickness of 15 μm. Physical properties and evaluation results of the resulting film are shown in Table 2.

(Examples 2 to 6 and Comparative examples 1 and 2)

Except for using the component proportions for each layer and the film production conditions specified in Table 2, the same procedure as in Example 1 was carried out to produce a polyolefin film. In these instances, thickness control was performed by changing the discharge rate in the extrusion step and the speed of the casting drums. Physical properties and evaluation results of the resulting film are shown in Table 2. Here, for the mixing of surface layer materials, the polypropylene material 3 and the polypropylene material D were dry-blended at a ratio of 70:30 (by mass) for the surface layer (I) in Example 3 and Comparative example 1 whereas the polypropylene material 3 and the polypropylene material D were dry-blended at a ratio of 80:20 (by mass) for the surface layer (I) in Comparative example 2. For the surface layer (I) in the other Examples and the base layer (II), the polypropylene material D was not used and the resin components therefor were dry-blended at the ratios given in Table 2

(Comparative example 3)

The polypropylene material 4, 4-methyl pentene-1 based polymer 2, and 1-butene based polymer were dry-blended at a ratio of 84:15:1 (by mass) to produce a resin composition a. In a testing machine containing Labo Plastomill (model 4C150) manufactured by Toyo Seiki Seisaku-sho, Ltd., and a twin screw extruder (equipped with a strand die, L/D=25) connected to each other, the resulting dry-blended resin composition a was fed from a hopper and melt-mixed at a maximum temperature 250°C. Then, a resin strand was produced, immediately followed by steps for cooling it with water and producing pellets by a strand cutter to provide pellets of the melt-blended (melt-mixed) resin composition a.

The resulting resin composition a was adopted as material for the surface layer (I) and introduced into a single screw extruder with a diameter of 50 mm (GM50, manufactured by GM Engineering Co., Ltd.) from a hopper whereas only the polypropylene raw material 4 was adopted as material for the base layer (II) and introduced into a single screw extruder with a diameter of 65 mm (GM65, manufactured by GM Engineering Co., Ltd.). Both were melted at 250°C. Then, they were extruded through a multimanifold die (width 300 mm) to form a molten resin sheet having a structure of "surface layer (I)/base layer (II)/surface layer (I)" with a thickness ratio of 1 :30:1, and the molten resin sheet is cooled for solidification by pressing it against a cooling drum surface with a temperature of 40°C under air pressure applied by an air knife with an air temperature of 30°C, thereby providing an unstretched sheet. Next, using a batch-type biaxial stretching machine (KARO IV, manufactured by Bruckner), it was stretched 5 times in the length direction and 9 times in the width direction under the stretching conditions of a preheating temperature of 162°C, preheating time of 2 minutes, stretching temperature of 162°C, and stretching rate of 100%/sec and treated under the heat setting conditions of 162°C and 30 seconds, and the resulting film was cooled at 30°C to provide a polyolefin film having a thickness of 20 μm. Physical properties and evaluation results of the resulting film are shown in Table 2.

[Table 2]

[Table 2]

| | | | Example 1 | Example 2 | Example 3 | Example 4 | Example 5 | Example 6 | Comparative example 1 | Comparative example 2 | Comparative example 3 |
|---|---|---|---|---|---|---|---|---|---|---|---|
| Surface layer (I) | PP material A | PP1 (parts by mass) | - | - | - | 70 | 95 | - | - | - | - |
| | | PP2 (parts by mass) | - | - | - | - | - | - | - | - | - |
| | PP material B | PP3 (parts by mass) | 98 | 100 | 97 | 30 | - | 80 | 98 | 97 | - |
| | | PP4 (parts by mass) | - | - | - | - | - | - | - | - | 84 |
| | branched PP material | branched PP1 (parts by mass) | - | - | - | - | 5 | 20 | - | - | - |
| | 4-methyl-1-pentene based polymer 1 (parts by mass) | | 2 | - | 3 | - | - | - | 2 | 3 | - |
| | 4-methyl-1-pentene based polymer 2 (parts by mass) | | - | - | - | - | - | - | - | - | 15 |
| | 1-butene based polymer (parts by mass) | | - | - | - | - | - | - | - | - | 1 |
| Inner layer (II) | PP material A | PP1 (parts by mass) | - | 80 | - | - | 95 | - | - | 90 | - |
| | | PP2 (parts by mass) | 70 | - | 70 | 60 | - | 100 | 70 | - | - |
| | PP material B | PP3 (parts by mass) | 27 | - | - | - | 5 | - | 27 | - | - |
| | | PP4 (parts by mass) | - | 15 | 30 | 38 | - | - | - | - | 100 |

(continued)

| | | Example 1 | Example 2 | Example 3 | Example 4 | Example 5 | Example 6 | Comparative example 1 | Comparative example 2 | Comparative example 3 |
|---|---|---|---|---|---|---|---|---|---|---|
| branched PP material | branched PP1 (parts by mass) | 3 | - | - | - | - | - | 3 | 10 | - |
| | branched PP2 (parts by mass) | - | 5 | - | - | - | - | - | - | - |
| | branched PP3 (parts by mass) | - | - | - | 2 | - | - | - | - | - |
| melt-extrusion temperature (°C) | | 260 | 260 | 260 | 260 | 260 | 260 | 260 | 260 | 250 |
| layer thickness ratio (surface layer (I)/base layer (II)/surface layer (I))/ (surface layer (I)/base layer (II)) | | 1/20/1 | 1/15/1 | 1/20/1 | 1/15/1 | 1/10/1 | 1/4 | 1/20/1 | 1/20/1 | 1/30/1 |
| casting drum temperature (°C) | | 15 | 25 | 50 | 28 | 28 | 28 | 15 | 80 | 40 |
| air temperature (°C) | | 15 | 25 | 50 | 28 | 28 | 42 | 25 | 80 | 30 |

(continued)

| | | | Example 1 | Example 2 | Example 3 | Example 4 | Example 5 | Example 6 | Comparative example 1 | Comparative example 2 | Comparative example 3 |
|---|---|---|---|---|---|---|---|---|---|---|---|
| Film production conditions | stretching in length direction (1st) | preheating temperature (°C) | 108 | 122 | 123 | 118 | 142 | 148 | 108 | 140 | simultaneous biaxial stretching preheating temperature: 162°C preheating time: 120 sec stretching temperature: 162°C stretching rate: 100%/sec stretching ratio: length direction 5.0 width direction 9.0 |
| | | stretching temperature (°C) | 108 | 122 | 123 | 118 | 142 | 145 | 146 | 140 | |
| | | ratio (times) | 1.5 | 1.7 | 1.1 | 1.9 | 4.4 | 4.4 | 5.8 | 4.3 | |
| | stretching in length direction (2nd) | stretching temperature (°C) | 146 | 132 | 143 | 143 | - | - | - | - | |
| | | ratio (times) | 3.5 | 3.1 | 4.1 | 2.8 | - | - | - | - | |
| | stretching in width direction | preheating temperature (°C) | 172 | 167 | 168 | 165 | 175 | 178 | 172 | 165 | |
| | | preheating time (seconds) | 3 | 3 | 3 | 3 | 3 | 3 | 3 | 3 | |
| | | stretching temperature (°C) | 152 | 158 | 156 | 160 | 155 | 163 | 170 | 165 | |
| | | stretching ratio (times) | 9.3 | 8.8 | 8.3 | 9.5 | 7.3 | 7.1 | 9.3 | 7.1 | |

| | | | Example 1 | Example 2 | Example 3 | Example 4 | Example 5 | Example 6 | Comparative example 1 | Comparative example 2 | Comparative example 3 |
|---|---|---|---|---|---|---|---|---|---|---|---|
| | heat treatment | heat treatment temperature (°C) | 175 | 165 | 168 | 160 | 180 | 180 | 150 | 164 | 162 |
| | | relaxation rate in width direction (%) | 13 | 7 | 10 | 9 | 12 | 12 | 2 | 9 | 0 |
| | cooling temperature (°C) | | 100 | 100 | 100 | 100 | 100 | 100 | 100 | 100 | 30 |
| | heating in connecting path | temperature (°C) | 123 | 95 | 115 | 70 | 125 | 128 | - | 118 | - |
| | | time (seconds) | 0.5 | 0.3 | 0.5 | 0.5 | 0.5 | 0.5 | - | 0.2 | - |
| | with a thickness of (μm) | | 15 | 12 | 17 | 15 | 18 | 18 | 15 | 15 | 20 |
| Log(M) =4.0 (%) | | | 7.5 | 5.3 | 14.8 | 12.7 | 14.3 | 6.8 | 7.7 | 3.8 | - |
| Log(M) =6.1 (%) | | | 9.1 | 11.4 | 6.8 | 13.2 | 4.7 | 14.7 | 8.9 | 4.3 | - |
| SPk(nm) | | | 25 | 15 | 85 | 45 | 70 | 105 | 18 | 135 | 32 |
| Main orientation 130°C heat shrinkage (%) | | | 0.2 | 1.5 | 0.4 | 1.2 | 1.8 | 0.1 | 6.8 | 1.6 | 3.2 |
| α(110) crystallite size (nm) | | | 14.7 | 14.1 | 15.2 | 16.3 | 17.2 | 18.7 | 16.2 | 17.3 | 20.2 |
| $T_{c0}$(°C) | | | 125 | 128 | 113 | 122 | 120 | 123 | 127 | 122 | 105 |
| μd after 130°C heating | | | 0.42 | 0.73 | 0.52 | 0.62 | 0.65 | 0.48 | 0.72 | 0.58 | 0.44 |

|  | Example 1 | Example 2 | Example 3 | Example 4 | Example 5 | Example 6 | Comparative example 1 | Comparative example 2 | Comparative example 3 |
|---|---|---|---|---|---|---|---|---|---|
| Sum of Young's modulus (GPa) | 7.3 | 6.3 | 6.7 | 7.5 | 5.8 | 6.1 | 8.2 | 5.5 | 6.8 |
| 100°C shrinkage stress (N/mm$^2$) | 0.07 | 0.35 | 0.2 | 0.8 | 0.04 | 0.05 | 1.2 | 0.5 | 1 |
| Transfer evaluation | A | A | B | B | B | B | A | C | B |
| Planarity | S | B | A | B | A | A | C | B | C |

EP 4 043 213 A1

In the rows under Film production conditions, "-" refers to the absence of the corresponding production step. It is also noted that simultaneous biaxial stretching is performed only in Comparative example 3 and multi-stage stretching is not performed in the simultaneous biaxial stretching step.

INDUSTRIAL APPLICABILITY

As described above, the polyolefin film according to the present invention can be used in various industrial applications such as packaging films, surface protective films, process films, sanitary products, agricultural products, construction products, medical products, and capacitor films. In particular, since they have highly smooth surfaces, they can be suitably used as surface protective films, process films, release films, and capacitor films.

**Claims**

1. A polyolefin film having an asperity height SPk of 130 nm or less on at least one surface, having a heat shrinkage rate of 2.0% or less in the main orientation direction after heat treatment at 130°C for 15 minutes, and having the sum of the $\alpha(110)$ crystallite size in the main orientation direction and that in the orthogonal direction of 20 nm or less.

2. A polyolefin film as set forth in claim 1, wherein the crystallization temperature $Tc_0$ determined by DSC analysis of the film and calculation by the extrapolation method is 115°C or more.

3. A polyolefin film as set forth in either claim 1 or 2, wherein the dynamic friction coefficient $\mu d$ in the direction orthogonal to the main orientation direction after heat treatment at 130°C for 10 minutes is 0.7 or less.

4. A polyolefin film as set forth in any one of claims 1 to 3, wherein the sum of the Young's modulus in the main orientation direction and that in the orthogonal direction is 6.0 GPa or more.

5. A polyolefin film as set forth in any one of claims 1 to 4, wherein the shrinkage stress in the direction orthogonal to the main orientation direction is 0.6 N/mm$^2$ or less during heating at 100°C.

6. A polyolefin film as set forth in any one of claims 1 to 5, comprising polypropylene resin as a primary component.

7. A polyolefin film as set forth in any one of claims 1 to 6, comprising at least a surface layer (I) and a base layer (II).

8. A polyolefin film as set forth in any one of claims 1 to 7, wherein the differential distribution value at a logarithmic molecular weight Log(M) of 4.0 is 3% or more and 15% or less as determined from a molecular weight distribution curve observed by gel permeation chromatography.

9. A polyolefin film as set forth in any one of claims 1 to 8, wherein the differential distribution value at a logarithmic molecular weight Log(M) of 6.1 is 1% or more and 15% or less as determined from a molecular weight distribution curve observed by gel permeation chromatography.

10. A surface protective film produced from a polyolefin film as set forth in any one of claims 1 to 9.

11. A process film produced from a polyolefin film as set forth in any one of claims 1 to 9.

12. A release film produced from a polyolefin film as set forth in any one of claims 1 to 9.

13. A film capacitor produced from a polyolefin film as set forth in any one of claims 1 to 9.

【Fig.1】

## INTERNATIONAL SEARCH REPORT

| International application No. |
| --- |
| PCT/JP2020/036849 |

**A. CLASSIFICATION OF SUBJECT MATTER**
B32B 27/32(2006.01)i; C08J 5/18(2006.01)i; H01G 4/32(2006.01)i
FI: C08J5/18 CES; H01G4/32 511L; B32B27/32 E

According to International Patent Classification (IPC) or to both national classification and IPC

**B. FIELDS SEARCHED**

Minimum documentation searched (classification system followed by classification symbols)
B32B27/32; C08J5/18; H01G4/32

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2017/221781 A1 (TOYOBO CO., LTD.) 28 December 2017 (2017-12-28) entire text | 1–13 |
| A | WO 2015/012324 A1 (TOYOBO CO., LTD.) 29 January 2015 (2015-01-29) entire text | 1–13 |
| A | JP 2017-35884 A (TORAY INDUSTRIES, INC.) 16 February 2017 (2017-02-16) entire text | 1–13 |
| A | JP 2017-57247 A (JAPAN POLYPROPYLENE CORPORATION) 23 March 2017 (2017-03-23) entire text | 1–13 |
| A | JP 2015-44406 A (TOYOBO CO., LTD.) 12 March 2015 (2015-03-12) entire text | 1–13 |
| A | WO 2015/012165 A1 (TOYOBO CO., LTD.) 29 January 2015 (2015-01-29) entire text | 1–13 |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 December 2020 (03.12.2020) | 15 December 2020 (15.12.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/036849

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-178615 A (TORAY INDUSTRIES, INC.) 08 October 2015 (2015-10-08) entire text | 1-13 |
| A | JP 2018-204001 A (TORAY INDUSTRIES, INC.) 27 December 2018 (2018-12-27) entire text | 1-13 |

Form PCT/ISA/210 (continuation of second sheet) (January 2015)

## INTERNATIONAL SEARCH REPORT
Information on patent family members

International application No.

PCT/JP2020/036849

| Patent Documents referred in the Report | Publication Date | Patent Family | Publication Date |
|---|---|---|---|
| WO 2017/221781 A1 | 28 Dec. 2017 | CN 109311273 A<br>KR 10-2019-0020763 A<br>TW 201815586 A | |
| WO 2015/012324 A1 | 29 Jan. 2015 | KR 10-2016-0034302 A<br>TW 201510034 A | |
| JP 2017-35884 A | 16 Feb. 2017 | (Family: none) | |
| JP 2017-57247 A | 23 Mar. 2017 | (Family: none) | |
| JP 2015-44406 A | 12 Mar. 2015 | (Family: none) | |
| WO 2015/012165 A1 | 29 Jan. 2015 | CN 105408114 A<br>KR 10-2016-0033117 A<br>TW 201509663 A | |
| JP 2015-178615 A | 08 Oct. 2015 | (Family: none) | |
| JP 2018-204001 A | 27 Dec. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016068387 A
- JP 2015120331 A
- JP HEI11273990 A